# EUROPÄISCHE PATENTSCHRIFT

(11) **EP 1 082 791 B1**
(45) Veröffentlichungstag und Bekanntmachung des Hinweises auf die Patenterteilung: **13.04.2005**
(21) Anmeldenummer: 99936341.9
(22) Anmeldetag: 25.05.1999
(51) Int. Cl.: H02B 13/035

(54) **KOMBINIERTER TRENN-ERDUNGSSCHALTER ZUM EINBAU IN EINEN KAPSELUNGSBAUSTEIN EINER GASISOLIERTEN SCHALTANLAGE UND KAPSELUNGSBAUSTEIN MIT EINEM EINGEBAUTEN KOMBINIERTEN TRENN-ERDUNGS-SCHALTER**
COMBINED DISCONNECTING-EARTHING SWITCH FOR INSTALLATION IN AN ENCAPSULATION MODULE OF A GAS-INSULATED SWITCHGEAR AND ENCAPSULATION MODULE COMPRISING A COMBINED DISCONNECTING-EARTHING SWITCH
COMMUTATEUR COMBINE DE SEPARATION ET DE MISE A LA TERRE POUR L'INSTALLATION DANS UNE MODULE D'ENCAPSULATION POUR UNE INSTALLATION DE COMMUTATION ISOLEE PAR GAZ ET MODULE D'ENCAPSULATION COMPORTANT UN COMMUTATEUR COMBINE DE SEPARATION ET DE MISE A LA TERRE

(30) Priorität: 28.05.1998 DE 19825386
(43) Veröffentlichungstag der Anmeldung: 14.03.2001
(73) Patentinhaber: SIEMENS AKTIENGESELLSCHAFT, 80333 München (DE)
(72) Erfinder: DAMBIETZ, Hans-Peter, D-13589 Berlin (DE); MEINHERZ, Manfred, D-13467 Berlin (DE); SUHR, Michael, D-13407 Berlin (DE)
(86) Internationale Anmeldenummer: PCT/DE1999/001571
(87) Internationale Veröffentlichungsnummer: WO 1999/062154

(56) Entgegenhaltungen:
- DE-A- 19 511 168
- US-A- 5 134 542

## Beschreibung

Die Erfindung liegt auf dem Gebiet der Energieverteilung und ist bei der konstruktiven Ausgestaltung eines kombinierten Trenn-Erdungs-Schalters anzuwenden, der als Schaltelement ein linear verschiebbares Schubkontaktstück aufweist, welches mittels einer isoliert nach außen geführten Schaltwelle und eines hieran angekoppelten Getriebes verschiebbar ist, und der in einem Kapselungsbaustein einer gasisolierten Schaltanlage angeordnet werden kann.

Bei einem bekannten Kapselungsbaustein dieser Art, dessen Kapselungsgehäuse einen Abschnitt eines einzelnen Phasenleiters einer dreiphasigen Schaltanlage aufnimmt, ist der kombinierte Trenn-Erdungs-Schalter im Bereich einer 90°-Umlenkung des Phasenleiters koaxial zur Achse des Kapselungsbausteines angeordnet. Ein zylindrisch ausgebildetes und längs seiner Achse linear verschiebbares Kontaktteil ist in einem Gehäuse geführt, das Teil der Strombahn ist, und weist einen strombahnseitigen und einen kapselungsseitigen Kontaktbereich auf. Dem kapselungsseitigen Kontaktbereich ist an einem Deckel des Kapselungsgehäuses ein Erdungskontakt zugeordnet, der als Kontaktbuchse ausgebildet ist. Parallel zum Kontaktteil ist eine isolierende Antriebswelle durch das Kapselungsgehäuse eingeführt, die über ein Umlenkgetriebe in Form einer Gewindestange und Gewindebuchse mit dem zylindrischen Kontaktteil gekoppelt ist (DE 24 14 200 A1).

Für gekapselte Schaltanlagen mit gemeinsamer Kapselung für die drei Phasenleiter sind zur Verringerung des Bauvolumens ebenfalls kombinierte Trenn-Erdungs-Schalter bekannt, die in einem T- oder kreuzförmigen Kapselungsgehäuse angeordnet sind, welches mit einem eine Mittellachse aufweisenden Durchgangsbereich und einem senkrecht dazu verlaufenden, ebenfalls eine Mittelachse aufweisenden Abgangsbereich versehen ist, wobei das Kapselungsgehäuse jeweils wenigstens zwei Abschnitte eines Phasenleiters und den diesen Phasenleiterabschnitten zugeordneten kombinierten Trenn-Erdungs-Schalter aufnimmt. Bei diesem Kapselungsbaustein ist jeweils wenigstens ein erster Phasenleiterabschnitt dem Durchgangsbereich und ein zweiter Phasenleiterabschnitt dem Abgangsbereich zugeordnet und der kombinierte Trenn-Erdungs-Schalter jedes Phasenleiters weist eine Trenn-Schaltstrecke und eine Erdungs-Schaltstrecke mit einem linear verschiebbaren, in einem gehäuseartigen Teil des zweiten Phasenleiterabschnittes geführten Schubkontaktstück auf; das Schubkontaktstück ist mittels einer Schaltwelle und eines an diese Schaltwelle angekoppelten Getriebes verschiebbar. Dabei ist der Erdungskontakt jeder Erdungsschaltstrecke derart an der Innenwand des Kapselungsgehäuses angeordnet, daß die Mittelachse der beiden Schaltstrecken unter einem Winkel zur Mittelachse sowohl des Durchgangsbereiches als auch des Abgangsbereiches des Kapselungsgehäuses verläuft. Diese bekannte Ausgestaltung des kombinierten Trenn-Erdungs-Schalters bedingt aufgrund der abgeknickten Führung der Strombahn im Bereich der Trennschaltstrecke gegenüber einer geradlinigen Führung eine ungleichmäßige Strombelastung im Kontaktbereich (DE 196 32 574 A1, EP 0 824 264 A2).

Aus der US 5,134,542 ist ein Trenn-Erdungs-Schalter bekannt. Auf einer Schaltwelle ist ein zweiarmiger Schwenkhebel angeordnet, über welchen eine Trennschaltstrecke und eine Erdungsschaltstrecke schaltbar sind.

Weiterhin sind in der US 5,134,542 folgende Dokumente erwähnt: US 3,780,354; US 4,827,088; US 5,003,427; DE 24 27 445; JP 56-116810; JP 60-62807; JP 61-170212 und GB 2083951.

Zur Ausgestaltung eines Sammelschienentrenners für eine Schaltvorrichtung, deren Leistungsschalter in einem isoliergasgefüllten Metallgehäuse angeordnet ist, ist es weiterhin bekannt, die beiden Trenn-Schaltstrecken koaxial zu zwei etwa rechtwinklig zueinander verlaufenden rohrförmigen Flanschansätzen des Metallgehäuses anzuordnen. Der Schnittpunkt der Mittelachsen dieser beiden Flanschansätze bildet das Zentrum einer beweglichen Kontaktanordnung, die ein erstes, linear verschiebbares und koaxial zur Mittelachse des einen Flanschansatzes geführtes Schubkontaktteil und ein zweites, gleich artiges, jedoch koaxial zum anderen Flanschansatz geführtes Schubkontaktteil aufweist. Beide Schubkontaktteile sind über je eine Koppelstange an einen Kurbelarm einer von einer Welle betätigten Kurbel angelenkt. Welle und Kurbel sind im Schnittpunkt der beiden Mittelachsen der rohrförmigen Flanschansätze gelagert, wobei das Lagergehäuse und die bewegliche Kontaktanordnung mit dem sammelschienenseitigen Stromanschluß des Leistungsschalters verbunden sind (DE 195 11 168 A1).

Ausgehend von einem kombinierten Trenn-Erdungs-Schalter mit den Merkmalen des Oberbegriffes des Patentanspruches 1 (DE 196 32 574 A1) liegt der Erfindung die Aufgabe zugrunde, den Raumbedarf des kombinierten Schalters als Ganzes zu verkleinern und dabei die Strombelastung im Kontaktbereich der Trennschaltstrecke möglichst zu vergleichmäßigen.

Zur Lösung dieser Aufgabe ist gemäß der Erfindung vorgesehen, daß die Erdungs-Schaltstrecke unter einem Winkel von 90 bis 150° zur Trenn-Schaltstrecke angeordnet ist, wobei das Schubkontaktstück in ein erstes Schubkontaktteil für die Trennschaltstrecke und ein zweites Schubkontaktteil für die Erdungs-Schaltstrecke unterteilt ist und die beiden Schubkontaktteile jeweils über ein Koppelglied an einen auf der Schaltwelle aufsitzenden, einarmigen Schwenkhebel angelenkt sind, dessen Schwenkachse mit Abstand zu den beiden Achsen der Schaltstrecken angeordnet ist.

Die gemäß der Erfindung vorgesehene winklige Zuordnung von Trenn-Schaltstrecke und Erdungs-Schaltstrecke in Verbindung mit einem Antrieb der beiden Schubkontaktteile über einen gemeinsamen, einarmigen Antriebshebel, dessen Schwenkachse innerhalb des von den beiden Schaltstrecken gebildeten Winkelbereiches liegt, ist die Möglichkeit gegeben, den kombinierten Schalter in Achsrichtung der Trennschaltstrecke sehr kurz zu bauen und die Trenn-Schaltstrecke im wesentlichen in Längsrichtung der zugehörigen Strombahn bzw. des zugehörigen Phasenleiterstückes anzuordnen; damit ist zugleich eine gleichmäßige Stromverteilung im Kontaktbereich der Trennschaltstrecke gegeben.

Die Zuordnung des Antriebshebels des den beiden Schubkontaktteilen zugeordneten Getriebes erfolgt zweckmäßig in der Weise, daß die Abstände der Schwenkachse des Schwenkhebels von den beiden Achsen der Schaltstrecken etwa der Länge des einarmigen Hebels entsprechen. Dies kommt insbesondere dann in Betracht, wenn die beiden Schaltstrecken hinsichtlich des Außendurchmessers der beiden Schubkontaktteile gleichartig ausgebildet sind. Bei gleichem Außendurchmesser empfiehlt es sich dabei, das Schubkontaktteil der Erdungsschaltstrecke mit einem aus einer Vielzahl von Kontaktfingern bestehenden hohlzylindrischen Kontaktbereich zu versehen, dem als Erdungskontakt am Kapselungsgehäuse ein pinartiges Kontaktstück zugeordnet ist. Eine derartige Ausgestaltung des Kontaktbereiches ist bereits in der älteren Patentanmeldung 198 16 361.4 be-schreiben (siehe auch WO 99/52119 A). Das Schubkontaktteil für die Erdungsschaltstrecke kann aber auch einen kleineren Durchmesser als das Schubkontaktteil für die Trennschaltstrecke aufweisen. Dadurch läßt sich gegebenenfalls der räumliche Aufwand für die Gestaltung des elektrisches Feldes im Bereich der Erdungsschaltstrecke reduzieren.

Um die Kraftübertragung von der Schaltwelle mittels des Schwenkhebels auf die beiden Schubkontaktteile zu optimieren, ist es weiterhin von Vorteil, wenn das schwenkbare Ende des Schwenkhebels T-förmig mit zwei in Schwenkrichtung hintereinander angeordneten Anlenkpunkten für die beiden Koppelglieder ausgebildet ist. Weiterhin ist es von Vorteil, wenn jedes Schubkontaktteil in einem rohrförmigen Gleitlager geführt ist. Ein solches Gleitlager kann aus einem temperaturbeständigen Kunststoff bestehen, der gute Gleiteigenschaften aufweist, beispielsweise einem fluorierten Polyäthylen.

Ein gemäß der Erfindung ausgebildeter kombinierter Trenn-Erdungs-Schalter ist insbesondere zum Einbau in einem Kapselungsbaustein für eine gasisolierte Hochspannungsschaltanlage geeignet, der gemäß dem eingangs genannten Stand der Technik (DE 196 32 574 A1) aus einem Kapselungsgehäuse mit einem eine Mittelachse aufweisenden Durchgangsbereich und einem senkrecht dazu verlaufenden, ebenfalls eine Mittelachse aufweisenden Abgangsbereich zur Aufnahme von wenigstens zwei Abschnitten eines Phasenleiters und eines diesen Phasenleiterabschnitten zugeordneten Trenn-Erdungs-Schalters aufweist und bei dem der Erdungskontakt der Erdungsschaltstrecke derart an der Innenwand des Kapselungsgehäuses angeordnet ist, daß die Mittelachse der Erdungsschaltstrecke unter einem Winkel zur Mittelachse des Abgangsbereiches verläuft. Bei einem derartigen Kapselungsbaustein kann man eine gemäß der Erfindung ausgebildete kombinierte Trenn-Erdungs-Schaltstrecke so anordnen, daß die Trenn-Schaltstrecke parallel zur Mittelachse des Abgangsbereiches verläuft. Dies ermöglicht es, den feststehenden Kontakt der Trenn-Schaltstrecke direkt am zugehörigen Phasenleiterstück zu befestigen.

Zwei Ausführungsbeispiele der Erfindung sind in den Figuren 1 bis 3 dargestellt. Dabei zeigt
- Figur 1: den prinzipiellen Aufbau eines gemäß der Erfindung ausgestalteten Kapselungsbausteines,
- Figur 2: eine detaillierte Darstellung einer gemäß der Erfindung ausgebildeten und für einen Kapselungsbaustein gemäß Figur 1 verwendeten kombinierten Trenn-Erdungs-Schaltstrecke und
- Figur 3: einen Kapselungsbaustein, bei dem die Trennschaltstrecke des kombinierten Trenn-Erdungs-Schalters als Längstrenner dient.

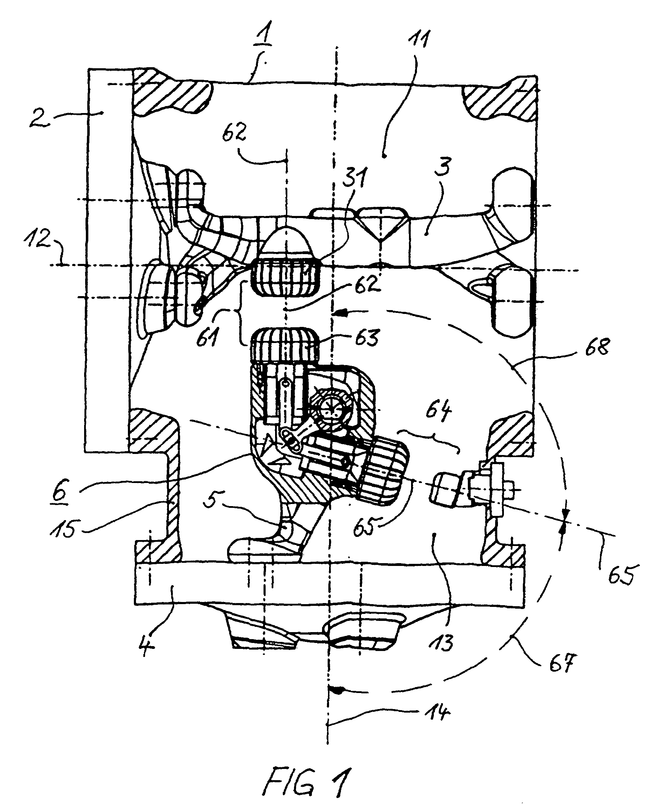

Figur 1 zeigt im Längsschnitt einen Kapselungsbaustein für eine gasisolierte Hochspannungsschaltanlage, der aus einem Kapselungsgehäuse 1 mit einem darin angeordneten kombinierten Trenn-Erdungsschalter 6 besteht. Der kombinierte Trenn-Erdungsschalter 6 ist dreiphasig ausgebildet, wobei im wesentlichen nur die zu einem der drei Phasenleiter gehörenden Teile dargestellt sind.

Das Kapselungsgehäuse 1 weist einen Durchgangsbereich 11 mit der Mittelachse 12 und einen Abgangsbereich 13 mit der Mittelachse 14 auf, wobei die beiden Mittelachsen 12 und 14 aufeinander senkrecht stehen. Dem Durchgangsbereich 11 ist ein erster Isolator 2 zugeordnet, an dem ein erster Phasenleiterabschnitt 3 befestigt ist. Dem Abgangsbereich 13 mit dem Wandbereich 15 ist an einem entsprechenden Befestigungsflansch ein zweiter Isolator 4 zugeordnet, an dem sich ein zweiter Phasenleiterabschnitt 5 abstützt.

Der kombinierte Trenn-Erdungs-Schalter 6 weist eine Trennschaltstrecke 61 mit der Mittelachse 62 und eine Erdungsschaltstrecke 64 mit der Mittelachse 65 auf. Die Mittelachse 62 der Trennschaltstrecke 61 verläuft parallel zur Mittelachse 14 des Abgangsbereiches 13 des Kapselungsgehäuses 1, während die Mittelachse 65 der Erdungsschaltstrecke 64 unter einem Winkel 67 gegen die Mittelachse 14 des Abgangsbereiches geneigt ist. Diese Neigung beträgt im vorliegenden Fall etwa 75°; dies bedeutet, daß die Erdungsschaltstrecke unter einem Winkel 68 von etwa 105° zur Trennschaltstrecke angeordnet ist.

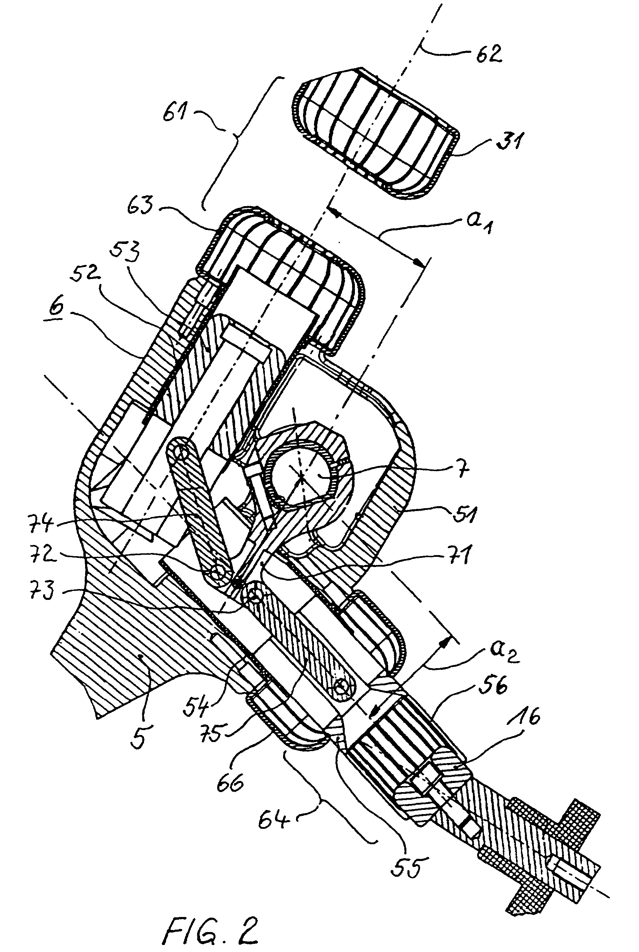

Gemäß Figur 2 weist der kombinierte Trenn-Erdungs-Schalter 6 im Bereich der Trenn-Schaltstrecke 61 ein am ersten Phasenleiterabschnitt 3 angeordnetes feststehendes Kontaktstück 31 auf, das als selbstabschirmender Fingerkontakt ausgebildet ist. Am gehäuseartigen Teil 51 des zweiten Phasenleiterabschnittes 5 ist der zweite feststehende Kontakt 63 der Trennschaltstrecke angeordnet, bei dem es sich ebenfalls um einen selbstabschirmenden Fingerkontakt handelt. Dieser Trennschaltstrecke ist weiterhin ein Schubkontaktteil 53 zugeordnet, das innerhalb des gehäuseartigen Teiles 51 in einem rohrförmigen Gleitlager 52 geführt ist. Dieses Schubkontaktteil 53 ist als zylindrischer Kontaktbolzen bzw. Kontaktstift ausgestaltet.

Der Erdungsschaltstrecke 64 zugehörig ist ein feststehender Abschirmkontakt 66 am gehäuseartigen Teil 51 sowie ein kapselungsseitiger Erdungskontakt 16, der im Wandbereich 15 des Kapselungsgehäuses 1 (s. Figur 1) befestigt ist. Zur Erdungsschaltstrecke 64 gehört weiterhin das Schubkontaktteil 55, das einen hohlzylindrischen, aus einer Vielzahl von Kontakt schaltstrecke 64 gehört weiterhin das Schubkontaktteil 55, das einen hohlzylindrischen, aus einer Vielzahl von Kontaktfingern 56 bestehenden Kontaktbereich aufweist und in einem Gleitlager 54 im gehäuseartigen Teil 51 geführt ist.

Die beiden Schubkontaktteile 53 und 55 sind über je ein Koppelglied 74 bzw. 75 an einen Schwenkhebel 71 angelenkt, der an seinem freien Ende T-förmig gestaltet und dort mit den in Schwenkrichtung hintereinander angeordneten Anlenkpunkten 72 und 73 versehen ist. Der Schwenkhebel 71 sitzt auf der Schaltwelle 7 auf, die senkrecht auf der durch die beiden Schaltstrecken aufgespannten Ebene und damit zur Zeichnungsebene verläuft. Diese Schaltwelle ist vorzugsweise gemäß der Patentanmeldung 198 16 366.5 ausgebildet. Sie ist dabei so angeordnet, daß sie innerhalb des von der Trennschaltstrecke 61 und der Erdungsschaltstrecke 64 aufgespannten Winkel 68 (s. Figur 1) liegt und sowohl von der Mittelachse 62 der Trennschaltstrecke 61 als auch von der Mittelachse 65 der Erdungsschaltstrecke 64 einen Abstand a₁ bzw. a₂ aufweist, der etwa der Länge des Schwenkhebels 71 entspricht.

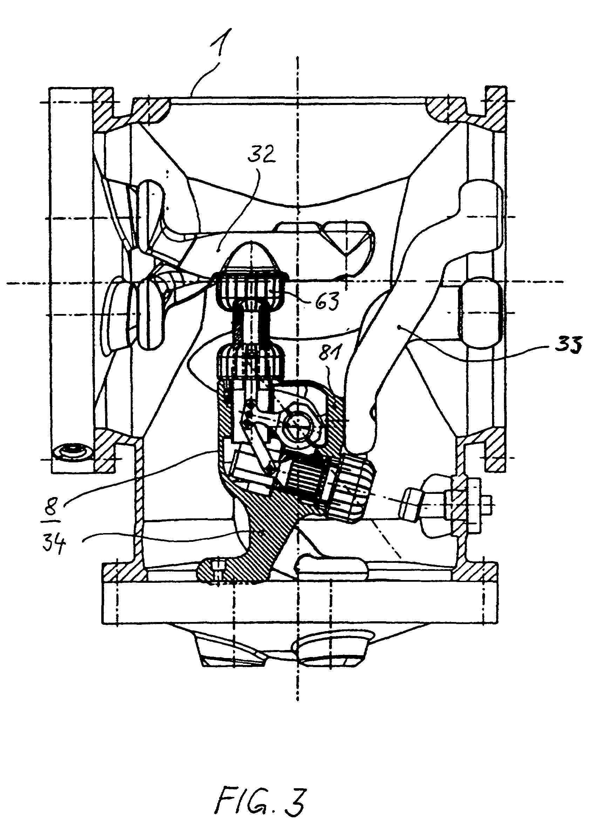

Figur 3 zeigt einen im Bereich der Sammelschiene einer gasisolierten Hochspannungsschaltanlage anzuordnenden Kapselungsbaustein mit einem als Längstrenner ausgebildeten kombinierten Trenn-Erdungsschalter. Die Zuordnung von Trenn- und Erdungs-Schaltstrecke zu dem Kapselungsgehäuse 1 und die Ausgestaltung des beweglichen Bereiches des Trenn-Erdungs-Schalters 8 entspricht dabei dem Ausführungsbeispiel gemäß den Figuren 1 und 2. Anders ist lediglich die Zuordnung der Phasenleiterabschnitte. Hierbei endet der erste Phasenleiterabschnitt 32 im Durchgangsbereich des Kapselungsgehäuses hinter dem selbstabschirmenden Kontakt 63 der Trennschaltstrecke, während ein zweiter Phasenleiterabschnitt 33 dem Durchgangsbereich zugeordnet ist; dieser Phasenleiterabschnitt 33 ist aber am gehäuseartigen Teil 81 des dem Abgangsbereich zugeordneten dritten Phasenleiterabschnitts 34 befestigt.

Die weitere Ausgestaltung eines solchen Längstrenners bzw. Linientrenners ist in der Patentanmeldung 198 16 360.6 beschrieben.

## Patentansprüche

1. Kombinierter Trenn-Erdungs-Schalter (6) zum Einbau in einen Kapselungsbaustein einer gasisolierten Hochspannungsschaltanlage, bestehend aus einem ersten Phasenleiterabschnitt (3) und einem zweiten Phasenleiterabschnitt (5) zur Bildung der Trenn-Schaltstrecke (61) und einem Erdungskontakt zur Bildung der Erdungs-Schaltstrecke (64) sowie einem linear verschiebbaren, in einem gehäuseartigen Teil des zweiten Phasenleiterabschnittes (5) geführten Schubkontaktstück, das mittels einer Schaltwelle (7) und eines an diese Schaltwelle (7) angekoppelten Getriebes verschiebbar ist,
wobei
die Erdungs-Schaltstrecke (64) unter einem Winkel (67) von 90 bis 150 ° zur Trenn-Schaltstrecke (61) angeordnet ist,
wobei das Schubkontaktstück in ein erstes Schubkontaktteil (53) für die Trennschaltstrecke und ein zweites Schubkontaktteil (55) für die Erdungs-Schaltstrecke unterteilt ist und die beiden Schubkontaktteile (53,55) jeweils über ein Koppelglied (74,75) an einen auf der Schaltwelle (7) aufsitzenden, einarmigen Schwenkhebel (71) angelenkt sind, dessen Schwenkachse mit Abstand (a₁, a₂) zu den beiden Achsen (62,65) der Schaltstrecken angeordnet ist.

2. Kombinierter Trenn-Erdungs-Schalter (6) nach Anspruch 1,
**dadurch gekennzeichnet,**
**daß** die Abstände (a₁,a₂) der Schwenkachse etwa der Länge des einarmigen Schwenkhebels (71) entsprechen.

3. Kombinierter Trenn-Erdungs-Schalter (6) nach Anspruch 1 oder 2,
**dadurch gekennzeichnet,**
**daß** das schwenkbare Ende des Schwenkhebels (71) T-förmig mit zwei in Schwenkrichtung hintereinander angeordneten Anlenkpunkten (72,73) für die beiden Koppelglieder (74,75) ausgebildet ist.

4. Kombinierter Trenn-Erdungs-Schalter (6) nach einem der Ansprüche 1 bis 3,
**dadurch gekennzeichnet,**
**daß** jedes Schubkontaktteil (53,55) in einem rohrförmigen Gleitlager (52,54) geführt ist.

5. Kombinierter Trenn-Erdungs-Schalter (6) nach einem der Ansprüche 1 bis 4,
**dadurch gekennzeichnet,**
**daß** das Schubkontaktteil für die Erdungs-Schaltstrecke (64) einen kleineren Durchmesser als das Schubkontaktteil für die Trenn-Schaltstrecke (61) aufweist.

6. Kombinierter Trenn-Erdungs-Schalter (6) nach einem der Ansprüche 1 bis 4,
**dadurch gekennzeichnet,**
**daß** das Schubkontaktteil (55) der Erdungsschaltstrecke (64) einen aus einer Vielzahl von Kontaktfingern (56) bestehenden hohlzylindrischen Kontaktbereich aufweist, dem als Erdungskontakt ein pinartiges Kontaktstück (16) zugeordnet ist.

7. Kapselungsbaustein für eine gasisolierte Hochspannungsschaltanlage,
bestehend aus einem Kapselungsgehäuse mit einem eine Mittelachse (12) aufweisenden Durchgangsbereich (11) und einem senkrecht dazu verlaufenden, ebenfalls eine Mittelachse (14) aufweisenden Abgangsbereich (13) zur Aufnahme von wenigstens zwei Abschnitten eines Phasenleiters und eines diesen Phasenleiterabschnitten zugeordneten kombinierten Trenn-Erdungs-Schalters (6), wobei
- wenigstens ein erster Phasenleiterabschnitt (3) dem Durchgangsbereich (11) und ein zweiter Phasenleiterabschnitt (5) dem Abgangsbereich (13) zugeordnet ist und der Trenn-Erdungs-Schalter (6) eine Trenn-Schaltstrecke (61) und eine Erdungs-Schaltstrecke (64) aufweist
- und der Erdungskontakt der Erdungs-Schaltstrecke (64) derart an der Innenwand des Kapselungsgehäuses angeordnet ist, daß die Mittelachse (65) der Erdungs-Schaltstrecke (64) unter einem Winkel zur Mittelachse (14) des Abgangsbereiches (13) verläuft,
wobei
der Trenn-Erdungs-Schalter (6) gemäß einem der Patentansprüche 1 bis 6 ausgebildet ist und
die Trenn-Schaltstrecke (61) parallel zur Mittelachse (14) des Abgangsbereiches (13) angeordnet ist.

## Claims

1. Combined disconnecting and earthing switch (6) for installation in an encapsulating module of a gas-insulated high-voltage switchgear assembly, comprising a first phase conductor section (3) and a second phase conductor section (5) for forming the disconnecting switching path (61) and an earthing contact for forming the earthing switching path (64) and a linearly displaceable sliding contact piece which is guided in a housing-like part of the second phase conductor section (5) and can be displaced by means of a switching shaft (7) and a gear mechanism coupled to this switching shaft (7), the earthing switching path (64) being arranged at an angle (67) of 90 to 150° with respect to the disconnecting switching path (61), the sliding contact piece being divided into a first sliding contact part (53) for the disconnecting switching path and a second sliding contact part (55) for the earthing switching path, and the two sliding contact parts (53, 55) each being hinged, via a coupling element (74, 75), on a one-armed pivot lever (71) which rests on the switching shaft (7) and whose pivot axis is arranged at a spacing (a₁, a₂) from the two axes (62, 65) of the switching paths.

2. Combined disconnecting and earthing switch (6) according to Claim 1, **characterized in that** the spacings (a₁, a₂) of the pivot axis approximately correspond to the length of the one-armed pivot lever (71).

3. Combined disconnecting and earthing switch (6) according to Claim 1 or 2, **characterized in that** that end of the pivot lever (71) which can pivot is T-shaped having two hinge points (72, 73), arranged one behind the other in the pivoting direction, for the two coupling elements (74, 75).

4. Combined disconnecting and earthing switch (6) according to one of Claims 1 to 3, **characterized in that** each sliding contact part (53, 55) is guided in a tubular sliding bearing (52, 54).

5. Combined disconnecting and earthing switch (6) according to one of Claims 1 to 4, **characterized in that** the sliding contact part for the earthing switching path (64) has a smaller diameter than the sliding contact part for the disconnecting switching path (61).

6. Combined disconnecting and earthing switch (6) according to one of Claims 1 to 4, **characterized in that** the sliding contact part (55) of the earthing switching path (64) has a hollow-cylindrical contact region which comprises a large number of contact fingers (56) and has an associated pin-like contact piece (16) as the earthing contact.

7. Encapsulating module for a gas-insulated high-voltage switchgear assembly, comprising an encapsulating housing having a passage region (11), having a centre axis (12), and an exit region (13), which extends perpendicularly thereto and likewise has a centre axis (14), for accommodating at least two sections of a phase conductor and a combined disconnecting and earthing switch (6) associated with these phase conductor sections,
- at least a first phase conductor section (3) being associated with the passage region (11) and a second phase conductor section (5) being associated with the exit region (13), and the disconnecting and earthing switch (6) having an disconnecting switching path (61) and an earthing switching path (64),
- and the earthing contact of the earthing switching path (64) being arranged on the inner wall of the encapsulating housing such that the centre axis (65) of the earthing switching path (64) extends at an angle with respect to the centre axis (14) of the exit region (13),
the disconnecting and earthing switch (6) being formed according to one of Patent Claims 1 to 6, and the disconnecting switching path (61) being arranged parallel to the centre axis (14) of the exit region (13).

## Revendications

1. Commutateur combiné de séparation et de mise à la terre (6) pour l'installation dans un module d'encapsulation de commutation haute tension isolée par gaz, consistant en un premier segment de fil de phase (3), en un deuxième segment de fil de phase (5) destiné à former l'intervalle de connexion avec la séparation (61) et en un contact de mise à la terre destiné à former l'intervalle de connexion avec la mise à la terre (64) ainsi qu'en un plot de contact par poussée coulissant de manière linéaire et étant guidé dans une partie en forme de boîtier du deuxième segment de fil de phase (5), ledit plot de contact par poussée pouvant coulisser au moyen d'un arbre de commande (7) et d'un engrenage couplé à cet arbre de commande (7) ;
l'intervalle de connexion avec la mise à la terre (64) étant disposé dans un certain angle (67) allant de 90 à 150 ° par rapport à l'intervalle de connexion avec la séparation (61) ;
le plot de contact par poussée étant subdivisé entre une première pièce de contact par poussée (53) prévue pour l'intervalle de connexion avec la séparation et une deuxième pièce de contact par poussée (55) prévue pour l'intervalle de connexion avec la mise à la terre et les deux pièces de contact par poussée (53, 55) étant respectivement articulées par l'intermédiaire d'un élément de couplage (74, 75) à un levier pivotant (71) à un bras reposant sur l'arbre de commande (7), l'axe de pivotement dudit levier pivotant étant disposé à une certaine distance (a₁, a₂) des deux axes (62,65) des intervalles de connexion.

2. Commutateur combiné de séparation et de mise à la terre (6) selon la revendication 1,
**caractérisé en ce que**
les distances (a₁, a₂) de l'axe de pivotement correspondent approximativement à la longueur du levier pivotant (71) à un bras.

3. Commutateur combiné de séparation et de mise à la terre (6) selon la revendication 1 ou 2,
**caractérisé en ce que**
l'extrémité pivotante du levier pivotant (71) est constitué en T avec deux points articulés (72, 73) disposés l'un derrière l'autre en direction de pivotement pour les deux éléments de couplage (74, 75).

4. Commutateur combiné de séparation et de mise à la terre (6) selon l'une quelconque des revendications 1 à 3,
**caractérisé en ce que**
chaque pièce de contact par poussée (53, 55) est guidée dans un palier à glissement (52, 54) tubulaire.

5. Commutateur combiné de séparation et de mise à la terre (6) selon l'une quelconque des revendications 1 à 4,
**caractérisé en ce que**
la pièce de contact par poussée prévue pour l'intervalle de connexion avec la mise à la terre (64) comporte un plus petit diamètre que la pièce de contact par poussée prévue pour l'intervalle de connexion avec la séparation (61).

6. Commutateur combiné de séparation et de mise à la terre (6) selon l'une quelconque des revendications 1 à 4,
**caractérisé en ce que**
la pièce de contact par poussée (55) de l'intervalle de connexion avec la mise à la terre (64) comporte une zone de contact en forme de cylindre creux composée d'une pluralité de doigts de contact (56), un plot de contact (16) en forme de broche étant associé à ladite zone de contact comme contact de mise à la terre.

7. Module d'encapsulation pour une commutation haute tension isolée par gaz,
consistant en une zone de passage (11) avec axe central (12) et en une zone de sortie (13) elle aussi dotée d'un axe central (14) perpendiculaire pour recevoir au moins deux segments d'un fil de phase et un commutateur combiné de séparation et de mise à la terre (6) associé à ces segments de fil de phase ;
- au moins un premier segment de fil de phase (3) étant respectivement associé à la zone de passage (11) et un deuxième segment de fil de phase (5) étant respectivement associé à la zone de sortie (13) et le commutateur combiné de séparation et de mise à la terre (6) comportant un intervalle de connexion avec la séparation (61) et un intervalle de connexion avec la mise à la terre (64) ;
- et le contact de mise à la terre de l'intervalle de connexion avec la mise à la terre (64) étant disposé de telle sorte sur la paroi interne du boîtier d'encapsulation que l'axe central (65) de l'intervalle de connexion avec la mise à la terre (64) s'étend selon un certain angle par rapport à l'axe central (14) de la zone de sortie (13) ;
le commutateur de séparation et de mise à la terre (6) étant constitué selon l'une quelconque des revendications 1 à 6 ; et
l'intervalle de connexion avec la séparation (61) étant disposé parallèlement à l'axe central (14) de la zone de sortie (13).
